# EUROPEAN PATENT APPLICATION

(11) **EP 1 289 329 A1**
(43) Date of publication of application: **05.03.2003**
(21) Application number: 01917760.9
(22) Date of filing: 30.03.2001
(51) Int. Cl.: H04Q 7/38, H04L 12/28

(54) **PERSONAL DIGITAL ASSISTANT, WIRELESS COMMUNICATION SYSTEM AND METHOD OF LINK ESTABLISHMENT**

(71) Applicant: MITSUBISHI DENKI KABUSHIKI KAISHA, Chiyoda-ku Tokyo 100-8310 (JP)
(72) Inventor: MORIMOTO, Hiroyuki, Mitsubishi Denki K.K., Tokyo 100-8310 (JP)
(74) Representative: Bohnenberger, Johannes, Dr.
(86) International application number: JP0102830
(87) International publication number: WO02082852

(57) **Abstract**

A transmitting/receiving part (21) detects the current position of a portable telephone (11) and sends the positional information to an access point management device (15), whereas when the access point management device (15) receives the positional information and sends back the device address BD_ADDR of a stationary terminal (12) present in the vicinity of the portable telephone, the transmitting/receiving part receives the device address BD_ADDR.

## Description

### TECHNICAL FIELD

The present invention relates to a personal digital assistant, a radio communication system and a method of establishing a bluetooth link.

### BACKGROUND ART

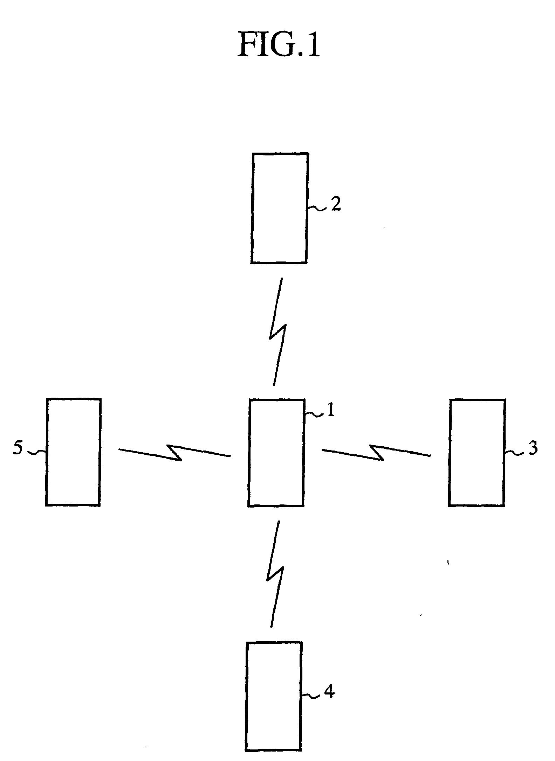

Fig. 1 is a block diagram showing the configuration of a conventional radio communication system.

Referring to Fig. 1, reference numeral 1 denotes a portable telephone as a personal digital assistant, and reference numerals 2 to 5 stationary terminals (access points) installed in the environs of the portable telephone 1.

Next, the operation of the conventional radio communication system will be described.

For example, when a user tries to manipulate the stationary terminal 5 by the use of the portable telephone 1, a bluetooth link is established between the portable telephone 1 and the stationary terminal 5.

More specifically, in the case of establishing the bluetooth link, the portable telephone 1 transmits an address request signal called "Inquiry."

Upon receiving the unique address request signal transmitted from the portable telephone 1, the stationary terminals 2 to 5 transmit their unique device addresses "DeviceA" to "DeviceD" to the portable telephone 1.

Upon receiving the device addresses from the stationary terminals 2 to 5, the portable telephone 1 performs first a page sequence defined in Specification of the Bluetooth System for the stationary terminal 2, thereby confirming their mutual device addresses and establishing the bluetooth link between them.

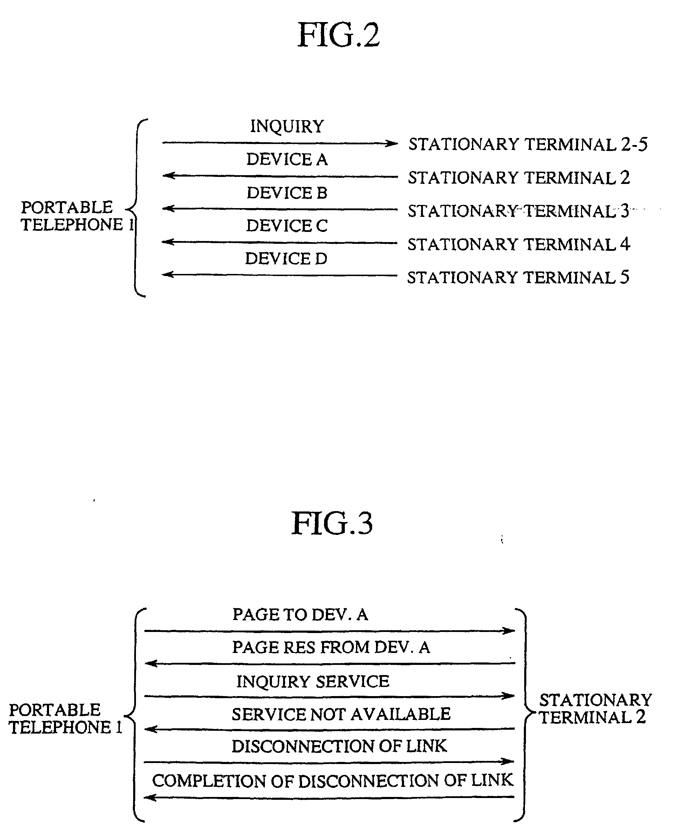

Then, the portable telephone 1 makes a check to see if the stationary terminal 2 offers a user's desired service (the service of the stationary terminal 5), and if the check proved that the desired service cannot be available, the portable telephone disconnects the bluetooth link (see Fig. 3).

The portable telephone 1 similarly establishes the bluetooth link with each of the stationary terminals 3 and 4, but since the stationary terminals 3 and 4 cannot offer the desired service in this example, the portable telephone disconnects the bluetooth link.

Next, the portable telephone 1 similarly establishes the bluetooth link with the stationary terminal 5. In this example, since the stationary terminal 5 offers the desired service, the portable telephone holds on the bluetooth link.

In addition to the above prior art, a technique is disclosed in Japanese Pat. Appln. Laid-Open No. 224197/2000, which introduces a new apparatus into a radio local area network.

However, such a technique is concerned strictly with the construction of a radio local area network and is not intended to interconnect two devices by the bluetooth link.

The conventional radio communication system thus configured as described above constrains the conventional system to check every stationary terminal having sent back its device address as to whether the stationary terminal renders the desired service. Hence, this retards speedy radio communications with the desired stationary terminal 5.

The present invention has been made to solve the above problem and an object thereof is to provide a personal digital assistant, a radio communication system and a method of establishing link which enable speedy radio communications with a desired access point.

### DISCLOSURE OF THE INVENTION

A personal digital assistant according to the present invention includes transmitting means for detecting the current position of the personal digital assistant and for transmitting the positional information to an access point management device; and receiving means for receiving the device address of an access point near the personal digital assistant sent from the access point management device after it has received the positional information.

With this arrangement, it is possible to quickly carry out radio communications with a desired access point.

In the personal digital assistant according to the present invention the link establishing means establishes the bluetooth link with an access point by performing the page sequence defined in the Bluetooth specifications.

This allows speedy establishment of the bluetooth link.

A radio communication system according to the present invention includes an access point management device that, upon receiving positional information from a personal digital assistant, retrieves the device address of an access point near the personal digital assistant by the use of the positional information.

This makes it possible to quickly carry out radio communications with a desired access point.

In the radio communication system according to the present invention the access point is a stationary terminal.

This makes it possible to establish the bluetooth link with the stationary terminal.

In the radio communication system according to the present invention the access point is a personal digital assistant.

This makes it possible to establish the bluetooth link with the personal digital assistant.

A method of establishing link according to the present invention includes the steps of detecting the current position of a personal digital assistant; transmitting the information about the detected position to an access point management device; and receiving the device address of an access point near the personal digital assistant when the access point management device receives the positional information and sends back the device address.

This makes it possible to quickly carry out radio communications with a desired access point.

### BRIEF DESCRIPTION OF THE DRAWINGS

Fig. 1 is a block diagram showing the configuration of a conventional radio communication system.
Fig. 2 is a sequence diagram showing a device address receiving procedure.
Fig. 3 is a sequence diagram showing a procedure for inquiring a desired service.
Fig. 4 is a block diagram showing a radio communication system according to a first embodiment of the present invention.
Fig. 5 is a flowchart showing a method of establishing link according to a first embodiment.

### BEST MODE FOR CARRYING OUT THE INVENTION

To facilitate a better understanding of the present invention, the description of the best mode for carrying out the present invention will be given below, with reference to the accompanying drawings.

### FIRST EMBODIMENT

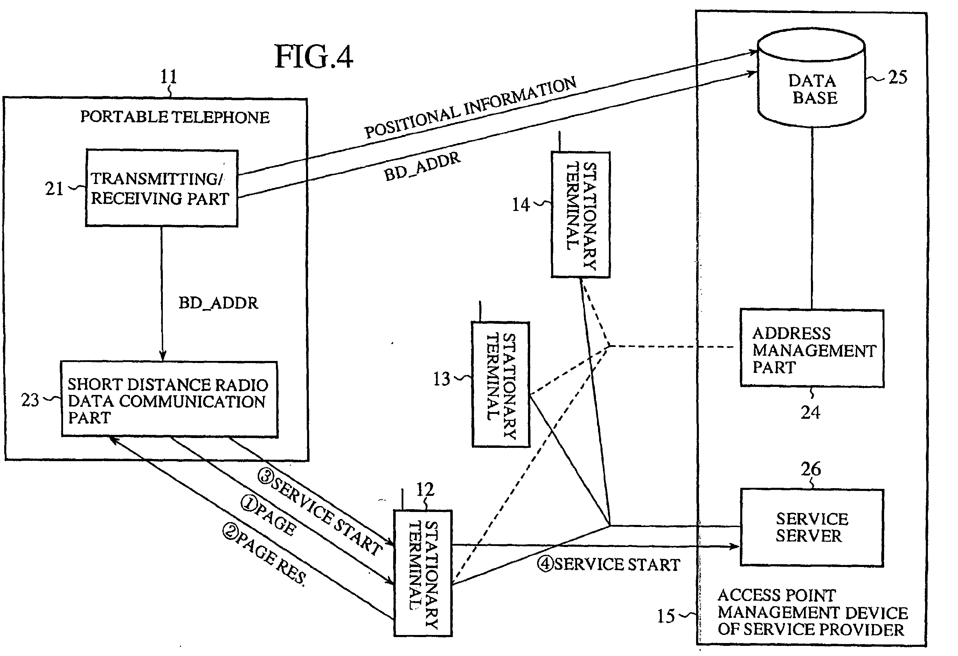

Fig. 4 is a block diagram illustrating a radio communication system according to the first embodiment of the present invention.

Referring to Fig. 4, reference numeral 11 denotes a portable telephone as a portable information terminal; reference numerals 12 to 14 stationary terminal (access points) such as vending machines; and reference numeral 15 an access point management device of a service provider that, upon receiving positional information from the portable telephone, retrieves a device address BD_ADDR of a stationary terminal present in the vicinity of the portable telephone 11 based on the positional information and transmits the device address BD_ADDR to the portable telephone 11.

Reference numeral 21 denotes a transmitting/receiving part (transmitting means, receiving means) which detects the current position of the portable telephone, transmits the its positional information to the access point management device 15 and receives therefrom the device address BD_ADDR of the access point present in the vicinity of the portable telephone 11 sent from the access point management device 15 in response to the positional information; and reference numeral 23 a short distance radio data communication part (link establishing means) which establishes a bluetooth link with the stationary terminal by the use of the device address BD_ADDR received by the transmitting/receiving part 22.

Reference numeral 24 denotes an address management part which retrieves the device address BD_ADDR of the stationary terminal in the vicinity of the portable telephone 11 based on the positional information; reference numeral 25 a data base in which device addresses BD_ADDR of the stationary terminals 12 to 14 are stored; and reference numeral 26 a service server which manages services of the stationary terminals 12 to 14.

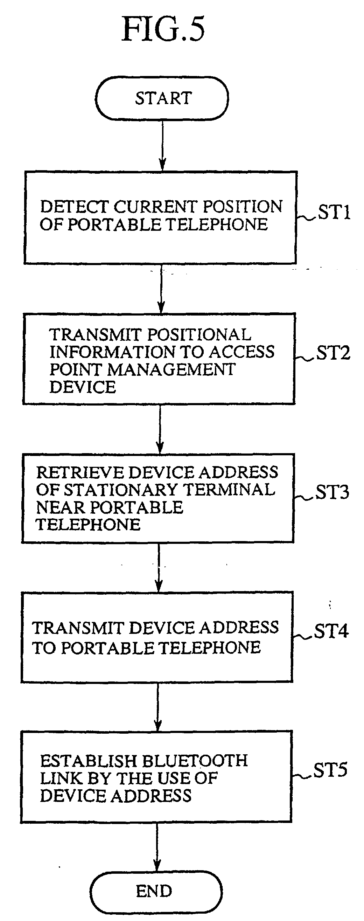

Fig. 5 is a flowchart showing the method of establishing link according to the first embodiment.

Next, the operation of the radio communication system of the present embodiment will be described.

For example, when the user manipulates the stationary terminal 12 by the use of the portable telephone 11, he/she interconnects the portable telephone 11 and the stationary terminal 12 by the bluetooth link.

More specifically, in the case of establishing the bluetooth link, the user carrying the portable telephone 11 approaches the stationary terminal 12 (approaches within the range of about 10 m away from it) and pushes a positional information transmitting button of the portable telephone 11.

As a result, the transmitting/receiving part 21 of the portable telephone 11 detects the current position of the portable telephone 11 taking advantage of a built-in GPS or positional information service of the portable telephone 11 (step ST1) and transmits the positional information to the access point management device 15 (step ST2).

Upon receiving the positional information from the portable telephone 11, the address management part 24 of the access point management device 15 uses the positional information as a key to retrieve from the data base 25 the device address BD_ADDR of the stationary terminal 12 in the vicinity of the portable telephone 11 (step ST3) and transmits the device address BD_ADDR to the portable telephone 11 (step ST4).

The transmitting/receiving part 21 of the portable telephone 11 receives the device address BD_ADDR from the access point management device 15 and outputs the device address BD_ADDR to the short distance radio data communication part 23.

Upon receiving the device address BD_ADDR from the transmitting/receiving part 21, the short distance radio data communication part 23 of the portable telephone 11 performs the page sequence defined in Specification of the Bluetooth System) , whereby the portable telephone and the stationary terminal 12 mutually confirm their device addresses and the bluetooth link is established between them (step ST5).

Incidentally, since the stationary terminal 12 offers the desired service, the bluetooth link will be held on.

As is evident from the above, according to the first embodiment, the transmitting/receiving part detects the current position of the portable telephone 11 and sends the positional information to the access point management device 15, whereas when the access point management device 15 receives the positional information and sends back the device address BD_ADDR of the stationary terminal 12 present in the vicinity of the portable telephone, the transmitting/receiving part receives the device address BD_ADDR. Hence, this eliminates the need for transmission of an address request signal to many stationary terminals, receipt of their device addresses BD_ADDR, and check on every stationary terminal as to whether its service is the desired one. Accordingly, it is possible to quickly carry out radio communications with the desired stationary terminal 12.

### SECOND EMBODIMENT

While in the first embodiment, the description has been made to the case where the access point management device 15 sends only one device address, even in the case of sending plural device addresses (for example, when plural stationary terminals are present near the portable telephone, plural device addresses may sometimes be sent) , it is also possible to limit the number of stationary terminals for which a check is made to see if they actually render desired services. Accordingly, in such a case, too, radio communications with the desired stationary terminal can quickly be carried out.

### THIRD EMBODIMENT

While in the first embodiment the access points are the stationary terminals 12 to 14, without restricted thereto, it may also be personal digital assistant such as portable telephones.

### INDUSTRIAL APPLICABILITY

As described above, the personal digital assistant, the radio communication system and the method of establishing link according to the present invention enable the bluetooth link to be quickly established without involving time-consuming procedural steps.

## Claims

1. A personal digital assistant comprising:
transmitting means (21) for detecting the current position of the personal digital assistant (1) and for transmitting the positional information to an access point management device (15) ;
receiving means (21) for receiving the device address of an access point near the personal digital assistant (1) sent from the access point management device (15) after it has received the positional information; and
link establishing means (23) for establishing a bluetooth link with the access point by the use of the device address received by the receiving means (21).

2. The personal digital assistant according to claim 1, the link establishing means (23) establishes the bluetooth link with the access point by performing a page sequence defined in the Bluetooth specifications.

3. A radio communication system comprising:
an access point management device (15) that, based on positional information, retrieves the device address of an access point near a personal digital assistant (1); and
a personal digital assistant (1) provided with transmitting means (21) for detecting the current position of the personal digital assistant (1) and for transmitting the positional information to the access point management device (15), receiving means (21) for receiving therefrom the device address of the access point sent from the access point management device (15) after it has received the positional information, and link establishing means (23) for establishing a bluetooth link with the access point by the use of the device address received by the receiving means (21).

4. The radio communication system according to claim 3, the access point is a stationary terminal (12).

5. The radio communication system according to claim 3, the access point is a personal digital assistant (1).

6. Amethod of establishing link comprising the steps of:
detecting the current position of a personal digital assistant (1);
transmitting the information about the detected position to an access point management device (15);
receiving the device address of an access point near the personal digital assistant (1) sent from the access point management device (15) in response to the positional information; and
establishing a bluetooth link with the access point by the use of the device address.
